# EUROPÄISCHE PATENTSCHRIFT

(11) **EP 2 106 519 B1**
(45) Veröffentlichungstag und Bekanntmachung des Hinweises auf die Patenterteilung: **17.08.2011**
(21) Anmeldenummer: 08774293.8
(22) Anmeldetag: 25.06.2008
(51) Int. Cl.: F27B 7/20, B01D 45/16, B04C 5/04

(54) **VORRICHTUNG UND VERFAHREN ZUR DURCHFÜHRUNG CHEMISCHER UND/ODER PHYSIKALISCHER REAKTIONEN ZWISCHEN EINEM FESTSTOFF UND EINEM GAS SOWIE ANLAGE ZUR ZEMENTHERSTELLUNG**
DEVICE AND METHOD FOR PERFORMING CHEMICAL AND/OR PHYSICAL REACTIONS BETWEEN A SOLID MATERIAL AND A GAS AND PLANT FOR PRODUCING CEMENT
DISPOSITIF ET PROCÉDÉ DE RÉALISATION DE RÉACTIONS CHIMIQUES ET/OU PHYSIQUES ENTRE UN SOLIDE ET UN GAZ, ET INSTALLATION DE PRODUCTION DE CIMENT

(30) Priorität: 07.08.2007 DE 102007037281
(43) Veröffentlichungstag der Anmeldung: 07.10.2009
(73) Patentinhaber: Polysius AG, 59269 Beckum (DE)
(72) Erfinder: KUPPER, Detlev, 48291 Telgte (DE); LAGAR GARCIA, Luis, 48149 Münster (DE); HOPPE, Andreas, 59555 Lippstadt (DE); THIEMEYER, Heinz-Werner, 59320 Ennigerloh (DE); GEORG, Verena, 59071 Hamm (DE); VÖLLINK, Marco, 45133 Essen (DE)
(74) Vertreter: Tetzner, Michael
(86) Internationale Anmeldenummer: PCT/EP2008/058100
(87) Internationale Veröffentlichungsnummer: WO 2009/019070

(56) Entgegenhaltungen:
- DE-A1- 10 309 575
- US-A- 4 318 692

## Beschreibung

Die Erfindung betrifft eine Vorrichtung sowie ein Verfahren zur Durchführung chemischer und/oder physikalischer Reaktionen zwischen einem Feststoff und einem Gas, insbesondere zur Vorwärmung, Kühlung und/oder Calcinierung von feinkörnigen Materialien sowie eine Anlage zur Zementherstellung.

Aus der Praxis sind zur Vorwärmung, Kühlung und Calcinierung von feinkörnigen Materialien insbesondere Systeme bestehend aus Gleichstromwärmetauscher und Zyklonabscheider bekannt. Meist weisen derartige Vorrichtungen mehrere übereinander angeordnete Stufen auf, wobei der Gasstrom von unten nach oben durch alle Stufen geleitet wird, während der Feststoff in entgegengesetzter Richtung den einzelnen Stufen zugeführt wird.

Derartige Systeme haben den Nachteil, dass sie eine enorme Bauhöhe benötigen und der Abscheidegrad im Zyklonabscheider nicht immer befriedigend ist. So kommt es in den Zyklonen oftmals zu unkontrollierten Strömungen, die beispielsweise am Zykloneintritt durch Überlagerung des Eintrittsgasstromes mit dem im Zyklon ausgebildeten Wirbelstrom oder durch Umkehr der Gasströmungsrichtung im Konus des Zyklons bedingt sind. Weiterhin kann es zum Wiedereinstreuen der schon am Zyklonrand abgeschiedenen Partikel in den Gaseintrittsstrom des Zyklons kommen.

Eine weitere Problematik besteht darin, dass sich bei unterschiedlich großen Bauformen die Zentrifugalkräfte bei gleichen Eintrittsgeschwindigkeiten verändern und sich dadurch andere Abscheideverhältnisse ergeben.

In der US 4,318,692 wurde daher ein mehrstufiger Vorwärmer für Zementrohmaterial vorgeschlagen, dessen einzelne Stufen jeweils aus einer Steigleitung und einer sich anschließenden wendel- und/oder spiralartigen Leitung bestehen. Die wendel- und/oder spiralartige Leitung weist einen rechteckigen Querschnitt auf und ist an einer Seitenfläche einer quaderförmigen Abscheidekammer angeschlossen. Die Anschlussstelle erstreckt sich dabei über die gesamte Seitenfläche der quaderförmigen Abscheidekammer. Der untere Teil der Abscheidekammer verjüngt sich trichterförmig und dient zum Abführen des Feststoffs, während das Gas nach oben abgeleitet wird. Der Abscheidegrad dieser Abscheidekammer ist jedoch ungenügend.

Aus der DE 103 09 575 A1 ist ein Zyklotron zur Abscheidung von Partikeln aus einem Gas-Partikel-Gemisch bekannt, das einen schräg einmündenden Ansaugkanal aufweist. Die Partikel werden nach unten abgeführt, während das Gas über ein in das Zyklotron mündendes Tauchrohr abgeleitet wird.

Der Erfindung liegt die Aufgabe zugrunde, den Abscheidegrad in der Abscheidekammer zu verbessern.

Erfindungsgemäß wird diese Aufgabe durch die Merkmale der Ansprüche 1 und 13 gelöst.

Die erfindungsgemäße Vorrichtung zur Durchführung chemischer und/oder physikalischer Reaktionen zwischen einem Feststoff und einem Gas, insbesondere zur Vorwärmung, Kühlung und/oder Calcinierung von feinkörnigen Materialien besteht im Wesentlichen aus wenigstens einer wendel- und/oder spiralartigen Leitung, in der durch Zentrifugalkräfte eine Gas-Feststoff-Suspension in einen Feststoffstrom und einen Gasstrom getrennt werden, und wenigstens einem mit dem Ende der wendel- bzw. spiralartigen Leitung in Verbindung stehenden Abscheidebereich, an den eine Feststoffleitung zum Ableiten des Feststoffstroms und eine Gasleitung zum Ableiten des Gasstroms angeschlossen ist. Der Abscheidebereich wird dabei durch einen unteren Teil der Gasleitung gebildet wird, wobei der Abscheidebereich im Bereich der Einmündung der wendel- und/oder spiralartigen Leitung und der sich oberhalb anschließende Teil der Gasleitung den gleichen Durchmesser aufweisen. Die wendel- und/oder spiralartige Leitung mündet zur Ausbildung einer Drallströmung tangential, mit einem Winkel gegenüber der Horizontalen von mindestens 30° in den Abscheidebereich.

Unter einer wendel- und/oder spiralartigen Leitung im Sinne der Erfindung wird eine Leitung verstanden, die zumindest abschnittsweise wendel- und/oder spiralförmig ausgebildet ist. Die Drehung der wendel- und/oder spiralartigen Leitung kann sich dabei insbesondere auch nur über einen kleineren Winkelbereich, von beispielsweise 90°, erstrecken.

Der wesentliche Unterschied gegenüber bisher bekannten Lösungen ist darin zu finden, dass der wendel- und/oder spiralartigen Leitung kein zyklonartiger Abscheider nachfolgt, sondern nur eine Gasleitung mit einer angeschlossenen Feststoffleitung. Durch die Art des Anschlusses der wendel- und/oder spiralartigen Leitung an die Gasleitung wird der zuvor vom Gasstrom getrennte Feststoff direkt ' der Feststoffleitung zugeführt und der Gasstrom zudem in eine Drallströmung überführt. Dadurch wird verhindert, dass Material wieder vom Gasstrom aufgenommen und ausgetragen wird.

Bei den der Erfindung zugrunde liegenden Versuchen hat sich gezeigt, dass sich durch Erzeugung dieser Drallströmung eine Trennung des Feststoffstromes und des Gasstromes mit hohem Wirkungsgrad erfolgen kann. Es können dabei insbesondere 70-100% des Materials aus der Gas-Feststoff-Suspension abgeschieden werden.

Weitere Ausgestaltungen der Erfindung sind Gegenstand der Unteransprüche.

Beim erfindungsgemäßen Verfahren wird die Gas-Feststoff-Suspension über die wendel- und/oder spiralartige Leitung derart in die Gasleitung eingeleitet, dass eine Drallströmung in der Gasleitung erzeugt wird und der Feststoff direkt nach unten abgeführt wird.

Erfindungsgemäß mündet die wendel- und/oder spiralartige Leitung zur Erzeugung der Drallströmung tangential in die nachfolgende Gasleitung. Unter tangential sind natürlich auch solche Anbindungen der wendel- und/oder spiralartige Leitung gemeint, die annähernd tangential ausgerichtet sind.

Gemäß einer bevorzugten Ausgestaltung der Erfindung ist die Gasleitung rund ausgebildet, um die Drallströmung zu unterstützen. Weiterhin ist es vorteilhaft, wenn die wendel- und/oder spiralartige Leitung unter einem Winkel gegenüber der Horizontalen, der zwischen 30-60° liegt, an die Gasleitung angeschlossen ist. Auf diese Weise wird der Feststoff direkt nach unten zur Feststoffleitung geführt, während der Gasstrom nach oben abgeleitet werden kann.

Um die Erzeugung der Drallströmung zu unterstützen, ist - in horizontaler Richtung betrachtet - die Breite der wendel- bzw. spiralartigen Leitung im Bereich des Anschlusses an die Abscheidekammer kleiner als die Breite der Abscheidekammer und vorzugsweise kleiner als 50% der Breite der Abscheidekammer.

Gemäß einer bevorzugten Ausgestaltung ist der untere Teil der Gasleitung trichterförmig verjüngt ausgebildet, wobei die Feststoffleitung an den sich trichterförmig verjüngenden Teil der Gasleitung angeschlossen ist.

Die Gasleitung kann im weiteren Verlauf in Strömungsrichtung des Gases einen kleineren oder einen größeren Durchmesser aufweisen. Auf diese Weise lassen sich verfahrenstechnische Parameter, wie Druckverlust oder Abscheidegrad, beeinflussen und optimieren.

In der Praxis wird die Vorrichtung zweckmäßigerweise als mehrstufige und/oder mehrsträngige Anordnung mit mehreren wendel- und/oder spiralartigen Leitungen und zugehörigen Gasleitungen ausgebildet. Dabei kann insbesondere eine Gas- . Feststoff-Suspensionsleitung vorgesehen werden, die eine Steigleitung und eine absteigende wendel- und/oder spiralartige Leitung aufweist, die über einen Umlenkkopf miteinander verbunden sind.

Bei einer mehrstufigen Anordnung sind mehrere, übereinander angeordnete Stufen vorgesehen, wobei jede Stufe folgende Bauteile umfasst:
a. eine Gas-Feststoff-Suspensionsleitung zum Leiten einer Gas-Feststoff Suspension mit einer wendel- und/oder spiralartigen Leitung,
b. einen Abscheidebereich,
c. eine Feststoffleitung zum Ableiten des abgetrennten Feststoffs
d. sowie eine Gasleitung zum Ableiten des abgetrennten Gases,
   wobei die Gasleitung einer Stufe in die Gas-Feststoff-Suspensionsleitung der nächst höheren Stufe übergeht und die Feststoffleitung einer Stufe in der Gas-Feststoff-Suspensionsleitung der nächst niedrigeren Stufe mündet.

Weitere Vorteile und Ausgestaltungen der Erfindung werden im Folgenden anhand der Beschreibung und der Zeichnung näher erläutert.

In der Zeichnung zeigen
- Fig. 1: eine Vorderansicht der Vorrichtung mit wendel-und/oder spiralartiger Leitung und Gasleitung,
- Fig. 2: eine um 90° gedrehte Ansicht der Vorrichtung gemäß Fig. 1,
- Fig. 3: eine Draufsicht der Vorrichtung gemäß Fig. 1,
- Fig. 4: eine Seitenansicht einer mehrstufigen Anordnung und
- Fig. 5: eine Draufsicht der mehrstufigen Anordnung gemäß Fig. 4 und

- Fig. 6: eine dreidimensionale Darstellung einer Anlage zur Zementherstellung.

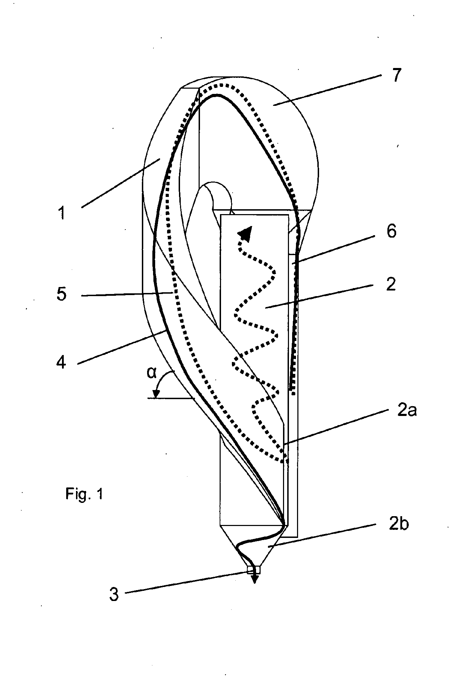

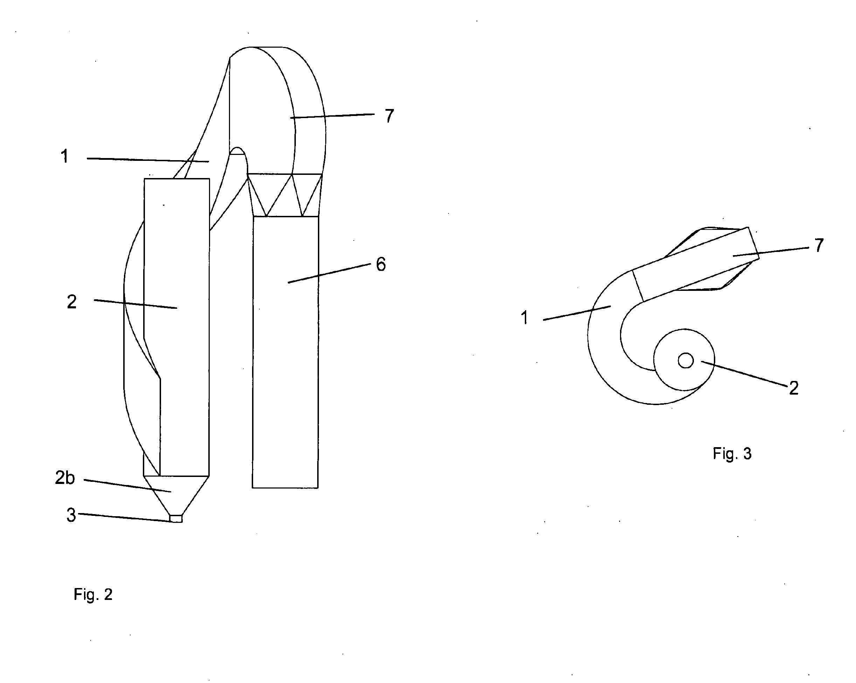

Die in den Fig. 1 bis Fig. 3 dargestellte Vorrichtung zur Durchführung chemischer und/oder physikalischer Reaktionen zwischen einem Feststoff 4 und einem Gas 5, insbesondere zur Vorwärmung, Kühlung und/oder Calcinierung von feinkörnigen Materialien, besteht im Wesentlichen aus wenigstens einer wendel- und/oder spiralartigen Leitung 1, wenigstens einer mit dem Ende der wendel- und/oder spiralartigen Leitung in Verbindung stehenden Gasleitung 2 zum Ableiten des Gasstroms sowie einer an die Gasleitung angeschlossenen Feststoffleitung 3 zum Ableiten des Feststoffes.

Der untere Teil der Gasleitung 2, in den die wendel- und/oder spiralartige Leitung 1 mündet, bildet einen Abscheidebereich 2a, wobei dieser Abscheidebereich und der sich oberhalb anschließende Teil der Gasleitung 2 den gleichen Durchmesser aufweisen. Die wendel- und/oder spiralartige Leitung 1 mündet tangential und mit einem Winkel α gegenüber der Horizontalen von mindestens 30° in den Abscheidebereich 2a. Der Winkel α liegt vorzugsweise im Bereich zwischen 30° und 60°.

Die Gasleitung 2 bzw. der Abscheidebereich 2a der Gasleitung 2 weist ferner in seinem unteren Bereich einen sich trichterförmig verjüngenden Teil 2b auf, an den die Feststoffleitung 3 angeschlossen ist. Der sich trichterförmig verjüngende Teil 2b schließt sich unmittelbar unterhalb der Einmündung der wendel- und/oder spiralartigen Leitung 1 an. Es ist im Rahmen der Erfindung aber auch denkbar, dass zwischen dem unteren Teil der Einmündung der wendel- und/oder spiralartigen Leitung 1 und dem sich trichterförmig verjüngenden Teil 2b ein kleiner Abstand vorgesehen ist, der aber weniger als der Radius vorzugsweise weniger als der halbe Radius, der Gasleitung 2 im Bereich der Einmündung betragen sollte.

Zur Durchführung chemischer und/oder physikalischer Reaktionen zwischen einem Feststoff und einem Gas wird die Gas-Feststoff-Suspension über die wendelund/oder spiralartige Leitung 1 der Gasleitung 2 zugeführt. Dabei kommt es in der wendel- und/oder spiralartigen Leitung 1 aufgrund der Zentrifugalkräfte zu einer Vorseparierung der Gas-Feststoff-Suspension in den Feststoffstrom 4 und den Gasstrom 5.

Durch die Art des Anschlusses der wendel- und/oder spiralartigen Leitung an die Gasleitung wird der zuvor vom Gasstrom getrennte Feststoffstrom 4 direkt über den sich trichterförmig verjüngenden Teil 2b der Feststoffleitung 3 zugeführt. Der Gasstrom 5 wird zudem in eine Drallströmung überführt und nach oben über die Gasleitung 2 abgeführt. Dadurch wird verhindert, dass Material wieder vom Gasstrom aufgenommen und ausgetragen wird.

Die schräg nach unten gerichtete Materialzuführung in die Gasleitung verhindert auch, dass es im Bereich der Mündung der wendel- und/oder spiralartigen Leitung 1 zu einer Überlagerung des Materialstromes mit der in der Gasleitung ausgebildeten Drallströmung kommt. Bei den der Erfindung zugrunde liegenden Versuchen hat sich gezeigt, dass durch Erzeugung dieser Drallströmung eine Trennung des Feststoffstromes und des Gasstromes mit hohem Wirkungsgrad erfolgen kann.

Gemäß einer weiteren Ausgestaltung der Erfindung ist der Querschnitt der Gasleitung 2 im Bereich der Einmündung 0,5 bits 1,5 mal so groß wie der Querschnitt der wendel- und/oder spiralartigen Leitung 1. Diese Querschnittsverhältnis unterstützt die Ausbildung der Drallströmung.

Für bestimmte Anwendungsfälle der Vorrichtung, beispielsweise als Vorrichtung zur Wärmebehandlung von feinkörnigem Material, kann, wie im dargestellten Ausführungsbeispiel, eine Gas-Feststoff-Suspensionsleitung vorgesehen werden, die eine Steigleitung 6 und die absteigende wendel- und/oder spiralartige Leitung 1 aufweist, und wobei ferner ein Umlenkkopf 7 vorgesehen ist, der die Steigleitung 6 mit der wendel- und/oder spiralartigen Leitung 1 verbindet. Durch den aufsteigenden und absteigenden Ast der Gas-Feststoff-Suspensionsleitung wird eine ausreichende Kontaktzeit zwischen Gas und Feststoff gewährleistet. Andererseits kann durch diese Konstruktion eine sehr kompakte Bauform mit vergleichsweise niedriger Bauhöhe erreicht werden.

Im Rahmen der Erfindung ist es denkbar, dass sich der Radius und/oder die Steigung und/oder die Querschnittsform und/oder die Querschnittsgröße der wendel- und/oder spiralartigen Leitung 1 im Strömungsrichtung der Gas-Feststoff-Suspension ändert. Auf diese Weise kann einerseits Einfluss auf die Vorseparierung der Gas-Feststoff-Suspension im Bereich der wendel- und/oder spiralartigen Leitung genommen werden und andererseits kann die wendel- und/oder spiralartige Leitung 1 an äußere Gegebenheiten angepasst werden. Dies ist insbesondere dann von Vorteil, wenn mehrere Stufen ineinander verschachtelt und übereinander angeordnet werden.

Der Radius, Steigung, Querschnittsform und/oder Querschnittsgröße können sich dabei in Strömungsrichtung sprunghaft und/oder zumindest in einem Abschnitt auch kontinuierlich ändern. So bewirkt beispielsweise eine Radiusverringerung einer Erhöhung der Zentrifugalkraft, während ein Radiuserhöhung einer Verringerung der Zentrifugalkraft entspricht. Durch Veränderung der Querschnittsform und -größe kann Einfluss auf die Strömungsgeschwindigkeit genommen werden.

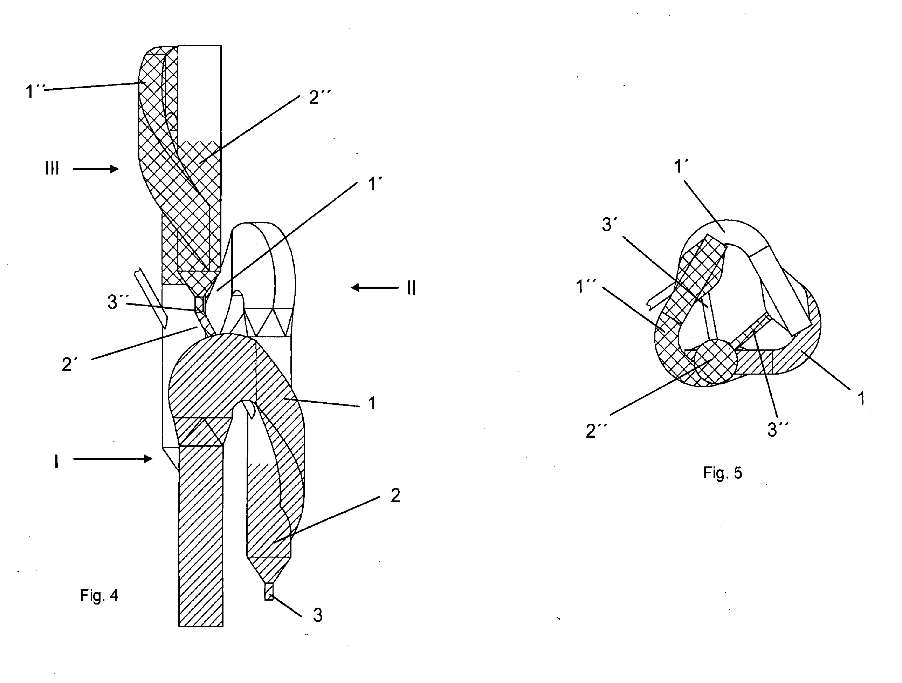

Üblicherweise wird man die oben beschriebene Vorrichtung als mehrstufige und/oder mehrsträngige Anordnung mit mehreren wendel- und/oder spiralartigen Leitungen und zugehörigen Gasleitungen ausbilden. Eine dreistufige Anordnung ist schematisch in den Fig. 4 und Fig. 5 dargestellt. Es handelt sich dabei insbesondere um eine untere Stufe I, eine mittlere Stufe II und eine obere Stufe III, wobei jeweils die Gasleitung 2 einer weiter unten liegenden Stufe in die wendel- bzw. spiralartige Leitung 1 eine darüber angeordneten Stufe übergeht. Die Gasleitung 2" der obersten Stufe III ist beispielsweise zur Entstaubung an einen Filter oder an einem nachgeschalteten hocheffizienten Abscheider angeschlossen. Bei den Feststoffleitungen 3 verhält es sich entsprechend umgekehrt. So ist die Feststoffleitung 3" der obersten Stufe III an die zur wendel- bzw. spiralartigen Leitung 1 der mittleren Stufe II führenden Gasleitung 2 angeschlossen, während die Feststoffleitung der mittleren Stufe II mit der zur wendel- bzw. spiralartigen Leitung 1 der unteren Stufe I führenden Gasleitung in Verbindung steht. Die Feststoffleitung 3 der untersten Stufe I steht mit einem nachfolgenden Aggregat, beispielsweise einem Calcinator oder einem Drehrohrofen in Verbindung. Auf diese Weise kann ein in die zur wendel- und/oder spiralartigen Leitung 1 " der oberste Stufe III führende Gasleitung eingeführter Feststoff in einem heißen Gasstrom wärmebehandelt werden.

Wie sich insbesondere aus den Fig. 4 und Fig. 5 erkennen lässt, lassen sich die einzelnen Stufen der mehrstufigen Anordnung aufgrund der wendel- bzw. spiralartigen Leitungen ineinander verschlungen anordnen, sodass sich in vertikaler Richtung eine sehr kompakte Gesamtanordnung ergibt.

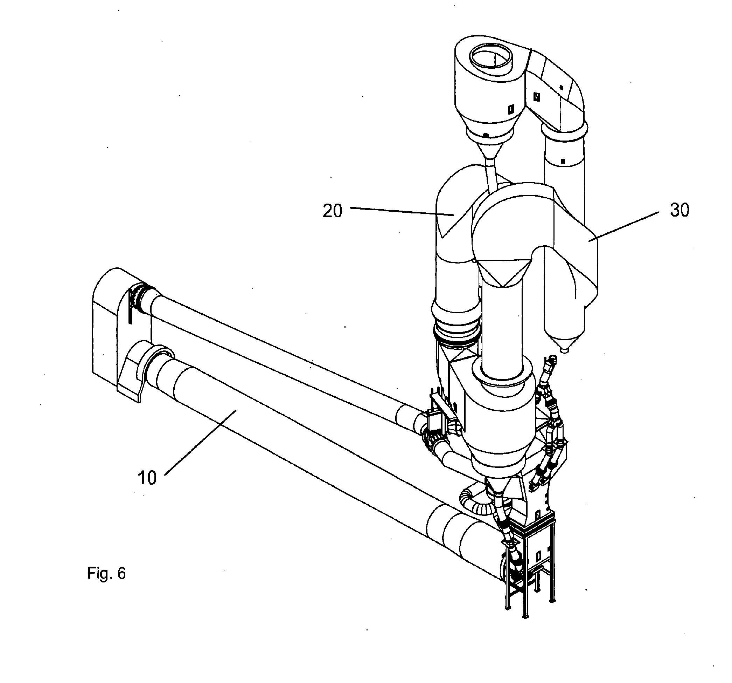

Fig. 6 zeigt schließlich eine dreidimensionale Darstellung einer Anlage zur Wärmebehandlung von feinkörnigem Gut bei der Zementherstellung mit einem Drehrohrofen 10, einem Calcinator 20 und einem Vorwärmer 30. Der Calcinator 20 und/oder der Vorwärmer 30 können dabei gemäß der in den Figuren 1 bis 5 beschriebenen Vorrichtung ausgebildet sein.

## Patentansprüche

1. Vorrichtung zur Durchführung chemischer und/oder physikalischer Reaktionen zwischen einem Feststoff und einem Gas, insbesondere zur Vorwärmung, Kühlung und/oder Calcinierung von feinkörnigen Materialien, mit
- wenigstens einer wendel- und/oder spiralartigen Leitung (1), in der durch Zentrifugalkräfte die Gas-Feststoff-Suspension in einen Feststoffstrom (4) und einen Gasstrom (5) getrennt werden und
- wenigstens einem mit dem Ende der wendel- und/oder spiralartigen Leitung (1) in Verbindung stehenden Abscheidebereich (2a), an den eine Feststoffleitung (3) zum Ableiten des Feststoffstroms (4) und eine Gasleitung (2) zum Ableiten des Gasstroms (5) angeschlossen sind,
**dadurch gekennzeichnet, dass** der Abscheidebereich durch einen unteren Teil der Gasleitung (2) gebildet wird, wobei der Abscheidebereich (2a) im Bereich der Einmündung der wendel- und/oder spiralartigen Leitung (1) und der sich oberhalb anschließende Teil der Gasleitung (2) den gleichen Durchmesser aufweisen, und die wendel- und/oder spiralartige Leitung (1) zur Ausbildung einer Drallströmung tangential und mit einem Winkel (α) gegenüber der Horizontalen von mindestens 30° in den Abscheidebereich (2a) einmündet.

2. Vorrichtung nach Anspruch 1, **dadurch gekennzeichnet, dass** die wendel- bzw. spiralartige Leitung (1) unter einem Winkel gegenüber der Horizontalen zwischen 30° bis 60° an die Gasleitung (2) angeschlossen ist.

3. Vorrichtung nach Anspruch 1, **dadurch gekennzeichnet, dass** - in horizontaler Richtung betrachtet - die Breite der wendel- bzw. spiralartigen Leitung (1) im Bereich des Anschlusses an die Gasleitung (2) kleiner als die Breite der Gasleitung (2) und vorzugsweise kleiner als 50% der Breite der Gasleitung (2) ist.

4. Vorrichtung nach Anspruch 1, **dadurch gekennzeichnet, dass** der Querschnitt der Gasleitung (2) im Bereich der Einmündung 0,5 - 1,5 mal so groß ist wie der Querschnitt der wendel- und/oder spiralartigen Leitung (1).

5. Vorrichtung nach Anspruch 1, **dadurch gekennzeichnet**, die Feststoffleitung (3) unterhalb des Abscheidebereichs (2a) angeschlossen ist.

6. Vorrichtung nach Anspruch 1, **dadurch gekennzeichnet, dass** der untere Teil (2b) der Gasleitung (2) trichterförmig verjüngt ausgebildet ist.

7. Vorrichtung nach Anspruch 6, **dadurch gekennzeichnet, dass** die Feststoffleitung an den sich trichterförmig verjüngenden Teil (2b) der Gasleitung (2) angeschlossen ist.

8. Vorrichtung nach Anspruch 6, **dadurch gekennzeichnet, dass** der Abstand zwischen dem unteren Teil der Einmündung der wendel- und/oder spiralartigen Leitung (1) und dem sich trichterförmig verjüngenden Teil (2b) weniger als der Radius, vorzugsweise weniger als der halbe Radius, der Gasleitung (2) im Bereich der Einmündung beträgt.

9. Vorrichtung nach Anspruch 6, **dadurch gekennzeichnet, dass** sich der trichterförmig verjüngende Teil (2b) unmittelbar unterhalb der Einmündung der wendel- und/oder spiralartigen Leitung (1) anschließt.

10. Vorrichtung nach Anspruch 1, **dadurch gekennzeichnet, dass** die Vorrichtung als mehrstufige und/oder mehrsträngige Anordnung mit mehreren wendel- und/oder spiralartigen Leitungen (1) und zugehörigen Gasleitungen (2) ausgebildet ist.

11. Vorrichtung nach Anspruch 1, **dadurch gekennzeichnet, dass** eine Gas-Feststoff-Suspensionsleitung vorgesehen ist, die eine Steigleitung (6) und die absteigende wendel- und/oder spiralartige Leitung (1) aufweist und ferner ein Umlenkkopf (7) vorgesehen ist, der die Steigleitung (6) mit der wendel- und/oder spiralartigen Leitung (1) verbindet.

12. Vorrichtung nach Anspruch 11, **dadurch gekennzeichnet, dass** mehrere, übereinander angeordnete Stufen (I, II, III) vorgesehen sind, wobei jede Stufe folgende Bauteile umfasst:
e. eine Gas-Feststoff-Suspensionsleitung zum Leiten einer Gas-Feststoff-Suspension,
f. einen Abscheidebereich (2a),
g. eine Feststoffleitung (3) zum Ableiten des abgetrennten Feststoffs
h. sowie eine Gasleitung (2) zum Ableiten des abgetrennten Gases,
wobei die Gasleitung (2) einer Stufe in die Gas-Feststoff-Suspensionsleitung der nächst höheren Stufe übergeht und die Feststoffleitung (3) einer Stufe in der Gas-Feststoff-Suspensionsleitung der nächst niedrigeren Stufe mündet.

13. Anlage zur Zementherstellung mit einem Vorwärmer (30), einem Calcinator (20), einem Ofen (10), wobei der Vorwärmer (30) und/oder der Calcinator (20) wenigstens eine Vorrichtung nach einem oder mehreren der vorhergehenden Ansprüche 1 bis 12 aufweist.

## Claims

1. A device for carrying out chemical and/or physical reactions between a solid material and a gas, in particular for the preheating, cooling and/or calcining of fine-grain materials, having
- at least one helical and/or spiral conduit (1), in which the gas-solid material suspension is separated by centrifugal forces into a solid material flow (4) and a gas flow (5) and,
- connected to the end of the helical and/or spiral conduit (1), at least one separation region (2a), to which a solid material conduit (3) for discharging the solid material flow (4) and a gas conduit (2) for discharging the gas flow (5) are connected,
**characterised in that** the separation region is formed by a lower part of the gas conduit (2), the separation region (2a) in the region of the junction of the helical and/or spiral conduit (1) and the part of the gas conduit (2) above and adjoining it have the same diameter and, to form a swirling flow, the helical and/or spiral conduit (1) opens out tangentially and at an angle (α) to the horizontal of at least 30° into the separation region (2a).

2. A device according to claim 1, **characterised in that** the helical and/or spiral conduit (1) is connected to the gas conduit (2) at an angle to the horizontal of between 30° and 60°.

3. A device according to claim 1, **characterised in that**, viewed in the horizontal direction, the width of the helical and/or spiral conduit (1) in the region of the connection to the gas conduit (2) is smaller than the width of the gas conduit (2) and preferably smaller than 50% of the width of the gas conduit (2).

4. A device according to claim 1, **characterised in that** the cross-section of the gas conduit (2) in the region of the junction is 0.5 to 1.5 times as large as the cross-section of the helical and/or spiral conduit (1).

5. A device according to claim 1, **characterised in that** the solid material conduit (3) is connected below the separation region (2a).

6. A device according to claim 1, **characterised in that** the lower part (2b) of the gas conduit (2) is constructed to taper in the form of a funnel.

7. A device according to claim 6, **characterised in that** the solid material conduit is connected to the part (2b) of the gas conduit (2) tapering in the form of a funnel.

8. A device according to claim 6, **characterised in that** the distance between the bottom part of the junction of the helical and/or spiral conduit (1) and the part (2b) tapering in the form of a funnel is less than the radius, preferably less than half the radius, of the gas conduit (2) in the region of the junction.

9. A device according to claim 6, **characterised in that** the part (2b) tapering in the form of a funnel adjoins the helical and/or spiral conduit (1) immediately below the junction.

10. A device according to claim 1, **characterised in that** the device is in the form of a multi-stage and/or multi-string arrangement having several helical and/or spiral conduits (1) and associated gas conduits (2).

11. A device according to claim 1, **characterised in that** a gas-solid material suspension conduit is provided, which comprises an ascending conduit (6) and the descending helical and/or spiral conduit (1), and a diverter head (7) is also provided, which connects the ascending conduit (6) with the helical and/or spiral conduit (1).

12. A device according to claim 11, **characterised in that** a plurality of stages (I, II, III) stacked one above the other are provided, each stage comprising the following components:
a. a gas-solid material suspension conduit for conducting a gas-solid material suspension,
b. a separation region (2a),
c. a solid material conduit (3) for discharging the separated solid material,
d. and a gas conduit (2) for discharging the separated gas,
the gas conduit (2) of one stage merging into the gas-solid material suspension conduit of the next higher stage and the solid material conduit (3) of one stage opening out into the gas-solid material suspension conduit of the next lower stage.

13. A plant for cement manufacture, having a preheater (30), a calciner (20) and a kiln (10), the preheater (30) and/or the calciner (20) having a device according to one or more of the preceding claims 1 to 12.

## Revendications

1. Dispositif pour la réalisation de réactions chimiques et / ou physiques entre une matière solide et un gaz, en particulier pour le préchauffage, le refroidissement et / ou la calcination de matériaux à grains fins, avec
- au moins une conduite en colimaçon et / ou en spirale (1), dans laquelle, sous l'effet de forces centrifuges, la suspension de gaz et matière solide est séparée en un flux de matière solide (4) et un flux de gaz (5), et
- au moins une zone de séparation (2a), reliée à l'extrémité de la conduite en colimaçon et / ou en spirale (1), à laquelle sont raccordées une conduite de matière solide (3), pour la dérivation du flux de matière solide (4), et une conduite de gaz (2), pour la dérivation du flux de gaz (5),
**caractérisé en ce que** la zone de séparation est formée par une partie inférieure de la conduite de gaz (2), sachant que la zone de séparation (2a) présente le même diamètre dans la région du débouché de la conduite en colimaçon et / ou en spirale (1) et dans la région de la partie de la conduite de gaz (2), raccordée au-dessus, et que la conduite en colimaçon et / ou en spirale (1) débouche dans la zone de séparation (2a) tangentiellement et sous un angle (α) d'au moins 30 ° par rapport à l'horizontale, pour former un écoulement tourbillonnaire.

2. Dispositif selon la revendication 1, **caractérisé en ce que** la conduite en colimaçon et / ou en spirale (1) est raccordée à la conduite de gaz (2) sous un angle situé entre 30 ° et 60 ° par rapport à l'horizontale.

3. Dispositif selon la revendication 1, **caractérisé en ce que** - vue dans la direction horizontale
- la largeur de la conduite en colimaçon et / ou en spirale (1) est plus petite, dans la région du raccordement à la conduite de gaz (2), que la largeur de la conduite de gaz (2), et est, de préférence, inférieure à 50 % de la largeur de la conduite de gaz (2).

4. Dispositif selon la revendication 1, **caractérisé en ce que** la section transversale de la conduite de gaz (2), dans la région du débouché, est 0,5 à 1,5 plus grande que la section transversale de la conduite en colimaçon et / ou en spirale (1).

5. Dispositif selon la revendication 1, **caractérisé en ce que** la conduite de matière solide (3) est raccordée au-dessous de la zone de séparation (2a).

6. Dispositif selon la revendication 1, **caractérisé en ce que** la partie inférieure (2b) de la conduite de gaz (2) est amincie en forme d'entonnoir.

7. Dispositif selon la revendication 6, **caractérisé en ce que** la conduite de matière solide est raccordée à la partie amincie en forme d'entonnoir (2b) de la conduite de gaz (2).

8. Dispositif selon la revendication 6, **caractérisé en ce que** la distance entre la partie inférieure du débouché de la conduite en colimaçon et / ou en spirale (1) et la partie amincie en forme d'entonnoir (2b) est inférieure au rayon, de préférence inférieure au demi rayon de la conduite de gaz (2), dans la région du débouché.

9. Dispositif selon la revendication 6, **caractérisé en ce que** la partie amincie en forme d'entonnoir (2b) se raccorde directement au-dessous du débouché de la conduite en colimaçon et / ou en spirale (1) .

10. Dispositif selon la revendication 1, **caractérisé en ce que** le dispositif est réalisé sous la forme d'un arrangement à plusieurs étages et / ou à plusieurs voies, avec plusieurs conduites en colimaçon et / ou en spirale (1) et conduites de gaz (2) associées.

11. Dispositif selon la revendication 1, **caractérisé en ce qu'**est prévue une conduite pour la suspension, laquelle conduite est dotée d'une conduite ascendante (6) et d'une conduite en colimaçon et / ou en spirale (1) descendante, et que, de plus, est prévu un organe de renvoi (7), qui relie la conduite ascendante (6) à la conduite en colimaçon et / ou en spirale (1).

12. Dispositif selon la revendication 11, **caractérisé en ce que** plusieurs étages, disposés les uns au-dessus des autres (I, II, III), sont prévus, sachant que chaque étage comprend les éléments suivantes :
e) une conduite de suspension de gaz et matière solide pour une suspension gaz et matière solide,
f) une zone de séparation (2a),
g) une conduite de matière solide (3) pour la dérivation de la matière solide séparée,
h) ainsi qu'une conduite de gaz (2) pour la dérivation du gaz séparé,
sachant que la conduite de gaz (2) d'un étage se raccorde à la conduite de suspension gaz et matière solide de l'étage supérieur suivant, et que la conduite de matière solide (3) d'un étage débouche dans la conduite de suspension gaz et matière solide de 1"étage inférieur suivant.

13. Installation de fabrication de ciment, avec un préchauffeur (30), un calcinateur (20), un four (10), sachant que le préchauffeur (30) et / ou le calcinateur (20) est / sont doté/s d'au moins un dispositif selon l'une ou plusieurs des revendications précédentes 1 à 12.
